# EUROPEAN PATENT SPECIFICATION

(11) **EP 3 879 142 B1**
(45) Date of publication and mention of the grant of the patent: **11.11.2026**
(21) Application number: 19858707.3
(22) Date of filing: 21.10.2019
(51) Int. Cl.: F16J 15/08, F02F 11/00, F16J 15/12

(54) **GASKET AND SEALING STRUCTURE**
DICHTUNG UND ABDICHTUNGSSTRUKTUR
JOINT ET STRUCTURE D'ÉTANCHÉITÉ

(30) Priority: 05.11.2018 JP 2018208183
(43) Date of publication of application: 15.09.2021
(73) Proprietor: NOK Corporation, Minato-ku Tokyo 105-8585 (JP)
(72) Inventor: AIHARA, Kazuya, Fukushima 9648533 (JP); TANJI, Isao, Fukushima 9648533 (JP)
(74) Representative: Global IP Europe Patentanwaltskanzlei
(86) International application number: PCT/JP2019/041312
(87) International publication number: WO 2020/095665

(56) References cited:
- EP-A2- 1 031 774
- WO-A1-2017/187978
- JP-A- 2009 156 382
- JP-A- 2013 036 607
- JP-A- H01 109 363
- JP-A- S6 260 909
- US-A1- 2002 000 696
- US-A1- 2008 023 923

## Description

### Technical Field

The present invention relates to a sealing structure, and particularly relates to a sealing structure that are used in a vehicle, a general-purpose machine or the like.

### Background Art

In a vehicle, or a general-purpose machine, for example, an automobile, a gasket is used for an engine, a device housing an electronic component therein or the like to seal a housing. A gasket is elastically deformed by being arranged in a compressed state between a pair of members that form a housing in combination, for example, thereby sealing the pair of members and sealing the housing.

An automobile may travel in a beach area or in an area where snow melting agent is sprayed. At this time, salt water or snow melting agent may adhere to a component of the automobile, and the salt water or the snow melting agent may enter and may be retained between the members that arrange and press the gasket. By the retained salt water or snow melting agent, corrosion may occur to the members that arrange and press the gasket.

When the members that arrange and press the gasket are formed of an aluminum alloy, aluminum has a high ionization tendency, and thus the members that arrange and press the gasket are easily corroded by retained salt water or snow melting agent. When the corroded portion exceeds a seal line of the gasket, a sealing function of the gasket is reduced or eliminated. Therefore, to components using gaskets, a salt spray test is performed in advance, and evaluation of corrosion resistance is performed.

In the salt spray test, in the component provided with a gasket, salt water is retained in the gap between the members that arrange and press the gasket, and the component is alternately placed in a dry state and a wet state repeatedly, and evaluation of corrosion resistance to salt water is performed.

In order to suppress reduction in sealing performance of the gasket in this way, it is preferable that the members that arrange and press the gasket are not corroded by salt water and a snow melting agent, and there has been conventionally proposed a structure of the gasket for suppressing corrosion of the members that arrange and press the gasket by salt water and snow melting agent.

The structure of the conventional gasket like this includes a metal plate, and a film-shaped coating layer that covers at least a part of the metal plate and is formed of an elastic body, in a free state where the gasket is not arranged and pressed. The metal plate has an annular base portion, an inner periphery portion extending from an inner periphery edge that is an edge on an inner periphery side of the base portion, and an outer periphery portion extending from an outer periphery edge that is an edge on an outer periphery side of the base portion. The inner periphery portion extends diagonally from the inner periphery edge of the base portion toward a side which a lower surface of the base portion faces, and the outer periphery portion extends diagonally from the outer periphery edge of the base portion toward the side which the lower surface of the base portion faces.

In the structure of the conventional gasket like this, in the assembled state, the gasket is arranged and pressed between a pair of members, and contacts a flat surface of one member via the coating layer in the center portion of the lower surface of the base portion and a vicinity of the center portion. Thereby, five seal lines are formed between the gasket and the pair of members (for example, see Patent Literature 1).

US 2008/023923 A1 discloses a gasket comprising a first gasket member and a second gasket member each including a metal plate, and rubber layers coated on both surfaces of the metal plate, wherein: the first and second gasket members oppose each other in an axis direction of the gasket, and respectively comprise base portions of annular flat plates, outer periphery portions slantly extending in directions away from each other in the axis direction from edge portions on an outer periphery side of the base portions, outer periphery side annular portions of annular flat plates extending in an extension direction of the base portions from the edge portions on the outer periphery side of the outer periphery portions, inner periphery portions slantly extending in directions away from each other in the axis direction from edge portions on an inner periphery side of the base portions, and inner periphery side annular portions of annular flat plate extending in the extension direction of the base portions from edge portions on the inner periphery side of the pair of inner periphery portions; the outer periphery portion respectively increase in diameter toward the directions away from each other; and the inner periphery portions respectively decrease in diameter toward the directions away from each other.

US 2002/000696 A1 discloses a cylinder head gasket comprising a pair of elastic metal sheets for being arranged and held between a cylinder head and a cylinder block which are fastened by a fastening force. The gasket includes a pair of beads as end parts of the elastic metal sheets and form an open end of the gasket on its outer periphery side.

EP 1 031 774 A2 discloses a gasket comprising a pair of metal shim plates for being arranged and held between a resin flange and an aluminium flange which are fastened by a fastening force. The gasket includes an inner peripheral portion as end parts of the metal shim plates and form an open end of the gasket on its inner periphery side.

JP 2009 156382 A discloses a sealing structure comprising a gasket comprising a first gasket member and a second gasket member each including a metal plate, and rubber layers coated on both surfaces of the metal plate, and first and second members that form a housing by being combined with each other, wherein: the gasket is arranged and held in a space between the first and second members for sealing the space, the first and second gasket members oppose each other, and respectively comprise base portions of annular flat plates, outer periphery portions diagonally extending in directions away from each other from edge portions on an outer periphery side of the base portions, outer periphery side annular portions of annular flat plates extending in an extension direction of the base portions from the edge portions on the outer periphery side of the outer periphery portions, inner periphery portions diagonally extending in directions away from each other from edge portions on an inner periphery side of the base portions, and inner periphery side annular portions of annular flat plate extending in the extension direction of the base portions from edge portions on the inner periphery side of the pair of inner periphery portions; the outer periphery portions respectively increase in diameter toward the directions away from each other; and the inner periphery portions respectively decrease in diameter toward the directions away from each other.

WO 2017/187978 A1 discloses a gasket comprising a pair of metal gasket members for being arranged and held between an upper member and a lower member which are fastened by a fastening force. The gasket includes an outer peripheral portion as end parts of the metal gasket members and form an open end of the gasket on its outer periphery side.

### Document List

### Patent Literature

Patent Literature 1: International Publication No. WO 2017/187978

### Summary of Invention

### Technical Problem

The structure of the conventional gasket like this has a gap between one member and the outer periphery portion of the gasket. Here, if the gap between one member and the outer periphery portion of the gasket can be decreased, it is difficult for salt water to be retained in the gap between one member and the outer periphery portion of the gasket, and it becomes possible to reduce the speed at which the one member is corroded. Therefore, the conventional gasket has been required to have the structure that can further reduce the speed at which the members that arrange and press the gasket are corroded.

The present invention is made in the light of the aforementioned problem, and it is an object of the present invention to provide a sealing structure that can further reduce a speed at which members that arrange and press the gasket are corroded.

### Solution to Problem

In order to attain the above described object, a sealing structure according to the present invention is defined in claim 1.

### Effects of Invention

According to the sealing structure of the present invention, the speed at which the members that arrange and press the gasket are corroded can be further reduced.

### Brief Description of Drawings

[Fig. 1] Fig. 1 is a front view illustrating a schematic configuration of a gasket according to an embodiment of the present invention.
[Fig. 2] Fig. 2 is a sectional view taken along line A-A of the gasket illustrated in Fig. 1.
[Fig. 3] Fig. 3 is an enlarged sectional view of a sealing structure illustrating a state where the gasket illustrated in Fig. 2 is arranged and pressed.

### Description of Embodiment

Hereinafter, an embodiment of the present invention will be described with reference to the drawings.

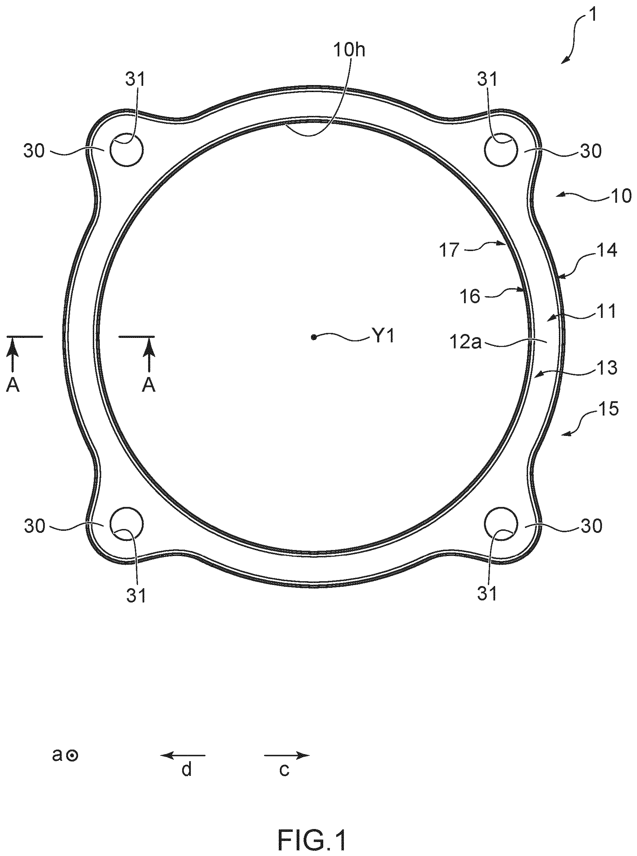

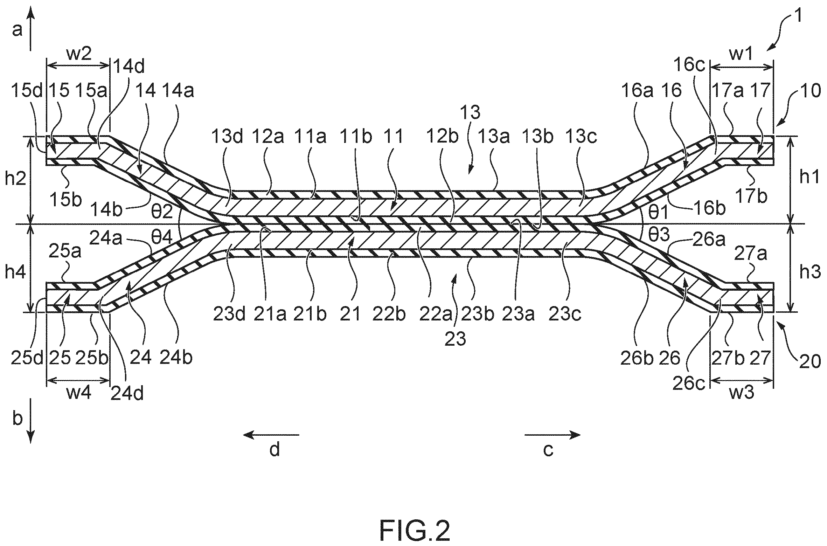

Fig. 1 is a front view illustrating a schematic configuration of a gasket 1 according to the embodiment of the present invention, and Fig. 2 is a sectional view taken along line A-A of the gasket 1 illustrated in Fig. 1. Hereinafter, for convenience of explanation, one direction (an arrow a direction) in a direction of an axis Y1 (hereinafter, also referred to as an axis Y1 direction) that is an axis of the gasket 1 in Figs. 1 and 2 is set as an upper side, and another direction (an arrow b direction) is set as a lower side. Further, one direction (an arrow c direction) in a radial direction extending to be orthogonal to the axis Y1 of the gasket 1 in Figs. 1 and 2 is set as an inner periphery side (a closed space side enclosed by the gasket 1), and another direction (arrow d direction) is set as an outer periphery side. When positional relationships and directions of the respective members are explained by using up and down in the following explanation, the up and down indicate the positional relationships and directions only in the drawings, and do not indicate the positional relationships and the directions when the respective members are incorporated in the actual vehicle or the like.

The gasket 1 is used in a vehicle, a general-purpose industrial machine or the like, and is used for sealing a space between two members by being elastically deformed by being arranged and pressed between the two members. The gasket 1 is arranged and pressed between the two members forming a housing, for example, in an engine or the like, and seals the housing. In Figs. 1 and 2, the gasket 1 that is not arranged and pressed between the two members forming a housing, but is in a free state is illustrated.

The gasket 1 according to the embodiment of the present invention includes a pair of gasket members (an upper gasket member 10, a lower gasket member 20) having metal plates 11 and 21, rubber layers (upper rubber layers 12a and 22a, lower rubber layers 12b and 22b) coated on both surfaces (upper surfaces 11a and 21a, lower surfaces 11b and 21b) of the metal plates 11 and 21. The pair of gasket members (the upper gasket member 10 and the lower gasket member 20) oppose each other.

The pair of gasket members (the upper gasket member 10 and the lower gasket member 20) respectively include base portions (an upper base portion 13, a lower base portion 23) of annular flat plates, outer periphery portions (an upper outer periphery portion 14, a lower outer periphery portion 24), and outer periphery side annular portions (an upper outer periphery side annular portion 15, a lower outer periphery side annular portion 25) of annular flat plates. The outer periphery portions (the upper outer periphery portion 14, the lower outer periphery portion 24) extend diagonally in directions (the axis Y1 direction (arrows ab directions)) away from each other from edge portions (outer periphery edge portions 13d, 23d) on an outer periphery side (the arrow d direction) of the base portions (the upper base portion 13, the lower base portion 23).

The outer periphery side annular portions (the upper outer periphery side annular portion 15, the lower outer periphery side annular portion 25) extend in the extension direction (a radial direction (arrows cd directions)) of the base portions (the upper base portion 13, the lower base portion 23) from the edge portions (the outer periphery edge portions 14d, 24d) on the outer periphery side of the outer periphery portions (the upper outer periphery portion 14, the lower outer periphery portion 24). Hereinafter, a configuration of the gasket 1 will be described specifically.

As illustrated in Fig. 2, the gasket 1 has the upper gasket member 10 and the lower gasket member 20. As illustrated in Fig. 1, the upper gasket member 10 has an outside shape formed into an annular shape, and an annular opening portion 10h is formed in a center portion thereof. In other words, the upper gasket member 10 is formed to be an annular flat plate as a whole.

In the upper gasket member 10, a plurality (in Fig. 1, four) of positioning portions 30 each in a substantially semicircular shape that protrude toward the outer periphery side (the arrow d direction) from the outer peripheral surface of the upper gasket member 10 are provided. In the plurality of positioning portions 30, bolt holes 31 that are insertion holes through which bolts for fastening the two members so that the gasket 1 is arranged and held between the members are inserted are formed.

The upper gasket member 10 is a rubber-coated metal (Hereinafter, also referred to as RCM.). In other words, the upper gasket member 10 has the metal plate 11, the upper rubber layer 12a that is coated on the upper surface 11a that is the surface on the upper side (the arrow a direction) of the metal plate 11, and the lower rubber layer 12b that is coated on the lower surface 11b that is the surface on the lower side (the arrow b direction) of the metal plate 11, as illustrated in Fig. 2.

The metal plate 11 is, for example, a steel sheet, stainless steel, a cold rolled steel sheet, a galvanized steel sheet, an aluminum alloy sheet or the like. The metal plate 11 may be formed of one metal plate having elasticity, or may be formed by laminating and overlapping a plurality of metal plates having elasticity each other. The upper rubber layer 12a and the lower rubber layer 12b are, for example, a synthetic rubber (including foam rubber) or the like including at least one kind of a nitryl rubber, a styrene butadiene rubber, a fluororubber, an acrylic rubber, and a silicon rubber, for example. Thicknesses of the metal plate 11, the upper rubber layer 12a and the lower rubber layer 12b are respectively uniform or substantially uniform. Considering attenuation of rubber, it is more preferable that the upper rubber layer 12a and the lower rubber layer 12b are of a foam rubber than a solid rubber.

The upper gasket member 10 includes the upper base portion 13 of the annular flat plate, the upper outer periphery portion 14 that extends diagonally to the upper side (the arrow a direction) from the outer periphery edge portion 13d that is the edge portion on the outer periphery side (the arrow d direction) of the upper base portion 13, and the upper outer periphery side annular portion 15 of the annular flat plate extending in the extension direction (radial direction (the arrows cd directions)) of the upper base portion 13 from the outer periphery edge portion 14d that is the edge portion on the outer periphery side of the upper outer periphery portion 14. The upper base portion 13, the upper outer periphery portion 14 and the upper outer periphery side annular portion 15 are respectively formed of the metal plate 11, the upper rubber layer 12a and the lower rubber layer 12b.

The upper base portion 13 is a portion extending annularly in an endless shape. An inner periphery edge portion 13c that is an edge portion on the inner periphery side (the arrow c direction) of the upper base portion 13 and the outer periphery edge portion 13d smoothly extend annularly. As illustrated in Fig. 1, in the outer periphery edge portion 13d, the positioning portion 30 smoothly extends along the bolt hole 31 to the outer periphery side in the vicinity of the portion where the bolt hole 31 is formed. Between the inner periphery edge portion 13c and the outer periphery edge portion 13d, an upper surface 13a and a lower surface 13b that are flat surfaces back to back with each other extend. The upper surface 13a is the surface on the upper side (the arrow a direction) in Fig. 2, and the lower surface 13b is the surface on the lower side (the arrow b direction) in Fig. 2.

The upper outer periphery portion 14 is formed by being diagonally curved to the upper side (the arrow a direction) from the outer periphery edge portion 13d of the upper base portion 13. The upper outer periphery portion 14 has an upper surface 14a that is a surface continuing to the upper surface 13a of the upper base portion 13, and a lower surface 14b that is a surface continuing to the lower surface 13b of the upper base portion 13. The upper outer periphery portion 14 is a portion increasing in diameter toward the upper side (the arrow a direction) from the outer periphery edge portion 13d of the upper base portion 13. **In** other words, the upper outer periphery portion 14 presents a conical tubular shape. Note that the upper outer periphery portion 14 may be in an annular shape having another smooth curved surface such as a trumpet shape.

The upper outer periphery side annular portion 15 is a portion annularly extending in an endless shape from the outer periphery edge portion 14d of the upper outer periphery portion 14. The upper outer periphery side annular portion 15 is formed by being diagonally curved to the lower side (the arrow b direction) and the outer periphery side (the arrow d direction) from an outer periphery edge portion 14d of the upper outer periphery portion 14. The upper outer periphery side annular portion 15 extends parallel or substantially parallel with the upper base portion 13 in the radial direction (the arrows cd directions). The upper outer periphery side annular portion 15 has an upper surface 15a that is a surface continuing to the upper surface 14a of the upper outer periphery portion 14, and a lower surface 15b that is a surface continuing to the lower surface 14b of the upper outer periphery portion 14.

Further, the upper gasket member 10 includes an upper inner periphery portion 16 that diagonally extends to the upper side (the arrow a direction) from the inner periphery edge portion 13c that is the edge portion on the inner periphery side (the arrow c direction) of the upper base portion 13, and an upper inner periphery side annular portion 17 of an annular flat plate extending in an extension direction (the radial direction (the arrows cd directions)) of the upper base portion 13 from an inner periphery edge portion 16c that is an edge portion on the inner periphery side of the upper inner periphery portion 16.

The upper inner periphery portion 16 is formed by being diagonally curved to the lower side (the arrow b direction) from the inner periphery edge portion 13c of the upper base portion 13. The upper inner periphery portion 16 has an upper surface 16a that is a surface continuing to the upper surface 13a of the upper base portion 13, and a lower surface 16b that is a surface continuing to the lower surface 13b of the upper base portion 13. The upper inner periphery portion 16 is a portion that decreases in diameter toward the upper side (the arrow a direction) from the inner periphery edge portion 13c of the upper base portion 13. In other words, the upper inner periphery portion 16 presents a conical tubular shape. Note that the upper inner periphery portion 16 may be in an annular shape having another smooth curved surface such as a trumpet shape.

The upper inner periphery side annular portion 17 is a portion extending annularly in an endless shape from an inner periphery edge portion 16c of the upper inner periphery portion 16. The upper inner periphery side annular portion 17 is formed by being diagonally curved to the lower side (the arrow b direction) and the inner periphery side (the arrow c direction) from the inner periphery edge portion 16c of the upper inner periphery portion 16. The upper inner periphery side annular portion 17 extends parallel or substantially parallel with the upper base portion 13 in the radial direction (the arrows cd directions). The upper inner periphery side annular portion 17 has an upper surface 17a that is a surface continuing to the upper surface 16a of the upper inner periphery portion 16, and a lower surface 17b that is a surface continuing to the lower surface 16b of the upper inner periphery portion 16.

The upper inner periphery portion 16 and the upper inner periphery side annular portion 17, and the upper outer periphery portion 14 and the upper outer periphery side annular portion 15 are formed symmetrically in the outer periphery side (the arrow d direction) and the inner periphery side (the arrow c direction) of the upper base portion 13. A length of the upper inner periphery portion 16 is a same length or substantially the same length as a length of the upper outer periphery portion 14, and an angle θ1 of the upper inner periphery portion 16 to the upper base portion 13 is a same or substantially the same angle as an angle θ2 of the upper outer periphery portion 14 to the upper base portion 13.

Further, a height h1 in the axis Y1 direction (the arrows ab directions) of the upper inner periphery side annular portion 17 is a same or substantially the same height as a height h2 in the axis Y1 direction of the upper outer periphery side annular portion 15, and a width w1 in the radial direction (the arrows cd directions) of the upper inner periphery side annular portion 17 is a same or substantially the same width as a width w2 in the radial direction of the upper outer periphery side annular portion 15. Note that the upper inner periphery portion 16 and the upper inner periphery side annular portion 17, and the upper outer periphery portion 14 and the upper outer periphery side annular portion 15 may be asymmetrical.

In the gasket 1, the lower gasket member 20 is in a same or substantially the same shape as the upper gasket member 10 illustrated in Fig. 1. In other words, in the lower gasket member 20, an outer shape is formed into an annular shape, and in a center portion of the lower gasket member 20, an annular opening portion (not illustrated) is formed. In other words, the lower gasket member 20 is formed to be an annular flat plate as a whole.

In the lower gasket member 20, a plurality of positioning portions (not illustrated) each in a substantially semicircular shape projecting toward the outer periphery side (the arrow d direction) from the outer peripheral surface of the lower gasket member 20 are provided in same or substantially the same positions in the axial direction (the arrows ab directions) as the positioning portions 30 of the upper gasket member 10. In the plurality of positioning portions, bolt holes (not illustrated) that are through-holes through which bolts for arranging and holding the gasket 1 are inserted are formed, in same or substantially the same positions in the axis Y1 direction (the arrows ab directions) as the bolt holes 31 of the upper gasket member 10 respectively.

The lower gasket member 20 is of RCM. In other words, the lower gasket member 20 has the metal plate 21, the upper rubber layer 22a coated on the upper surface 21a that is the surface on the upper side (the arrow a direction) of the metal plate 21, and the lower rubber layer 22b that is coated on the lower surface 21b that is the surface on the lower side (the arrow b direction) of the metal plate 21. The metal plate 21, the upper rubber layer 22a and the lower rubber layer 22b are formed of same or substantially the same materials as the materials of the metal plate 11, the upper rubber layer 12a and the lower rubber layer 12b of the upper gasket member 10.

Thicknesses of the metal plate 21, the upper rubber layer 22a and the lower rubber layer 22b are respectively uniform or substantially uniform. Further, the thicknesses of the metal plate 21, the upper rubber layer 22a and the lower rubber layer 22b are same or substantially the same thicknesses as the thicknesses of the metal plate 11, the upper rubber layer 12a and the lower rubber layer 12b of the upper gasket member 10.

The lower gasket member 20 is disposed on the lower side (the arrow b direction) of the upper gasket member 10 to oppose the upper gasket member 10. The lower gasket member 20 is formed symmetrically with the upper gasket member 10 in the axis Y1 direction (the arrows ab directions).

The lower gasket member 20 includes the lower base portion 23 of the annular flat plate, the lower outer periphery portion 24 diagonally extending to the lower side (the arrow b direction) from the outer periphery edge portion 23d that is the edge portion on the outer periphery side (the arrow d direction) of the lower base portion 23, and the lower outer periphery side annular portion 25 of the annular flat plate extending in the extension direction (the radial direction (the arrows cd directions)) of the lower base portion 23 from the outer periphery edge portion 24d that is the edge portion on the outer periphery side of the lower outer periphery portion 24. The lower base portion 23, the lower outer periphery portion 24 and the lower outer periphery side annular portion 25 are respectively formed of the metal plate 21, the upper rubber layer 22a and the lower rubber layer 22b.

The lower base portion 23 is a portion extending annularly in an endless shape. An inner periphery edge portion 23c that is an edge portion at an inner periphery side (the arrow c direction) of the lower base portion 23 and the outer periphery edge portion 23d smoothly extend annularly. In the outer periphery edge portion 23d, positioning portions (not illustrated) smoothly extend along bolt holes to the outer periphery side in the vicinity of the portions where the bolt holes (not illustrated) are formed. Between the inner periphery edge portion 23c and the outer periphery edge portion 23d, an upper surface 23a and a lower surface 23b that are planes back to back with each other extend. The upper surface 23a is a surface on the upper side (the arrow a direction) in Fig. 2, and the lower surface 23b is a surface on the lower side (the arrow b direction) in Fig. 2. A width in the radial direction (the arrows cd directions) in the lower base portion 23 is a same or substantially the same width as a width in the radial direction of the upper base portion 13.

The lower outer periphery portion 24 is formed by being diagonally curved to the lower side (the arrow b direction) from the outer periphery edge portion 23d of the lower base portion 23. The lower outer periphery portion 24 has an upper surface 24a that is a surface continuing to the upper surface 23a of the lower base portion 23, and a lower surface 24b that is a surface continuing to the lower surface 23b of the lower base portion 23. The lower outer periphery portion 24 is a portion in which a diameter increases toward the lower side (the arrow b direction) from the outer periphery edge portion 23d of the lower base portion 23. In other words, the lower outer periphery portion 24 presents a conical tubular shape. Note that the lower outer periphery portion 24 may be in an annular shape having another smooth curved surface such as a trumpet shape.

A length of the lower outer periphery portion 24 is a same or substantially the same length as the length of the upper outer periphery portion 14 of the upper gasket member 10, and an angle θ4 of the lower outer periphery portion 24 to the lower base portion 23 is a same or substantially the same angle as the angle θ2 of the upper outer periphery portion 14 to the upper base portion 13 in the upper gasket member 10.

The lower outer periphery side annular portion 25 is a portion extending annularly in an endless shape from the outer periphery edge portion 24d of the lower outer periphery portion 24. The lower outer periphery side annular portion 25 is formed by being diagonally curved to the upper side (the arrow a direction) and the outer periphery side (the arrow d direction) from the outer periphery edge portion 24d of the lower outer periphery portion 24. The lower outer periphery side annular portion 25 extends parallel or substantially parallel with the lower base portion 23 in the radial direction (the arrows cd directions). The lower outer periphery side annular portion 25 has an upper surface 25a that is a surface continuing to the upper surface 24a of the lower outer periphery portion 24, and a lower surface 25b that is a surface continuing to the lower surface 24b of the lower outer periphery portion 24.

A height h4 in the axis Y1 direction (the arrows ab directions) of the lower outer periphery side annular portion 25 to the lower base portion 23 is a same or substantially the same height as the height h2 in the axis Y1 direction of the upper outer periphery side annular portion 15 to the upper base portion 13, and a width w4 in the radial direction (the arrows cd directions) of the lower outer periphery side annular portion 25 is a same or substantially the same width as the width w2 in the radial direction of the upper outer periphery side annular portion 15.

Further, the lower gasket member 20 includes a lower inner periphery portion 26 that diagonally extends to the lower side (the arrow b direction) from the inner periphery edge portion 23c that is an edge portion at the inner periphery side (the arrow c direction) of the lower base portion 23, and a lower inner periphery side annular portion 27 of an annular flat plate extending in the extension direction (the radial direction (the arrows cd directions)) of the lower base portion 23 from an inner periphery edge portion 26c that is an edge portion on the inner periphery side of the lower inner periphery portion 26.

The lower inner periphery portion 26 is formed by being diagonally curved to the lower side (the arrow b direction) from the inner periphery edge portion 23c of the lower base portion 23. The lower inner periphery portion 26 has an upper surface 26a that is a surface continuing to the upper surface 23a of the lower base portion 23, and a lower surface 26b that is a surface continuing to a lower surface 23b of the lower base portion 23. The lower inner periphery portion 26 is a portion in which a diameter decreases toward the lower side (the arrow b direction) from the inner periphery edge portion 23c of the lower base portion 23. In other words, the lower inner periphery portion 26 presents a conical tubular shape. Note that the lower inner periphery portion 26 may be in an annular shape having another smooth curved surface such as a trumpet shape.

A length of the lower inner periphery portion 26 is a same or substantially the same length as the length of the upper inner periphery portion 16 of the upper gasket member 10, and an angle θ3 of the lower inner periphery portion 26 to the lower base portion 23 is a same or substantially the same angle as the angle θ1 of the upper inner periphery portion 16 in the upper gasket member 10 to the upper base portion 13.

The lower inner periphery side annular portion 27 is a portion extending annularly in an endless shape from the inner periphery edge portion 26c of the lower inner periphery portion 26. The lower inner periphery side annular portion 27 is formed by being diagonally curved to the upper side (the arrow a direction) and the inner periphery side (the arrow c direction) from the inner periphery edge portion 26c of the lower inner periphery portion 26. The lower inner periphery side annular portion 27 extends parallel or substantially parallel with the lower base portion 23 in the radial direction (the arrows cd directions). The lower inner periphery side annular portion 27 has an upper surface 27a that is a surface continuing to the upper surface 26a of the lower inner periphery portion 26, and a lower surface 27b that is a surface continuing to the lower surface 26b of the lower inner periphery portion 26.

A height h3 in the axis Y1 direction (the arrows ab directions) of the lower inner periphery side annular portion 27 to the lower base portion 23 is a same or substantially the same height as the height h1 in the axis Y1 direction of the upper inner periphery side annular portion 17 to the upper base portion 13, and a width w3 in the radial direction (the arrows cd directions) of the lower inner periphery side annular portion 27 is a same or substantially the same width as the width w1 in the radial direction of the upper inner periphery side annular portion 17.

The lower inner periphery portion 26 and the lower inner periphery side annular portion 27, and the lower outer periphery portion 24 and the lower outer periphery side annular portion 25 are formed symmetrically in the outer periphery side (the arrow d direction) and the inner periphery side (the arrow c direction) of the lower base portion 23. A length of the lower inner periphery portion 26 is a same or substantially the same length as the length of the lower outer periphery portion 24, and the angle θ3 of the lower inner periphery portion 26 to the lower base portion 23 is a same or substantially the same angle as the angle θ4 of the lower outer periphery portion 24 to the lower base portion 23.

Further, the height h3 in the axis Y1 direction (the arrows ab directions) of the lower inner periphery side annular portion 27 is a same or substantially the same height as the height h4 in the axis Y1 direction of the lower outer periphery side annular portion 25, and the width w3 in the radial direction (the arrows cd directions) of the lower inner periphery side annular portion 27 is a same or substantially the same width as the width w4 in the radial direction of the lower outer periphery side annular portion 25. Note that the lower inner periphery portion 26 and the lower inner periphery side annular portion 27, and the lower outer periphery portion 24 and the lower outer periphery side annular portion 25 may be asymmetrical. Further, the lower gasket member 20 may be asymmetrical with the upper gasket member 10 in the axis Y1 direction (the arrows ab directions).

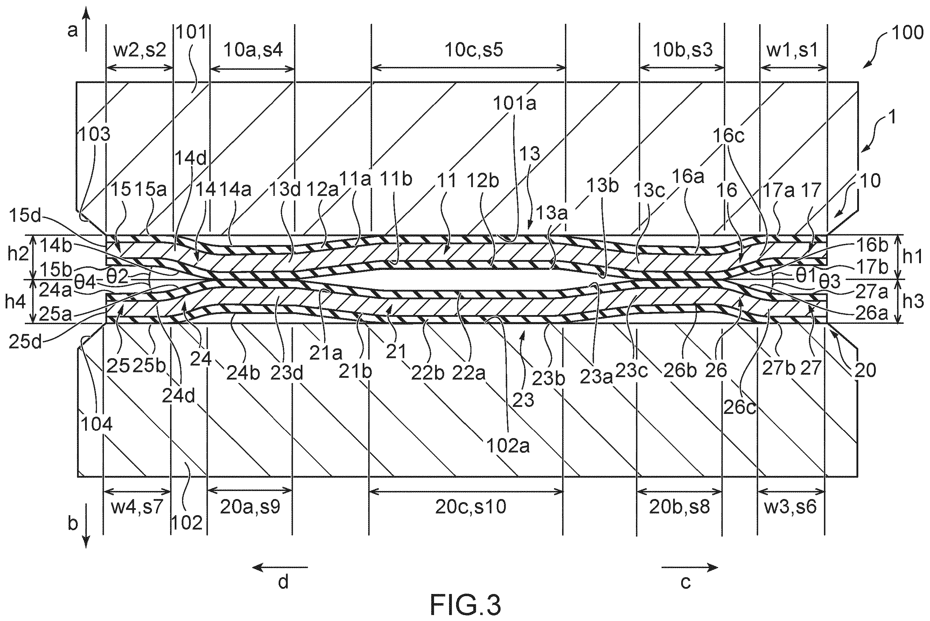

Subsequently, a state where the gasket 1 is mounted to one member 101 and another member 102 that are objects to be sealed will be described. Fig. 3 is an enlarged sectional view of a sealing structure 100 illustrating a state where the gasket 1 illustrated in Fig. 2 is arranged and pressed. On an upper side (the arrow a direction) of the gasket 1, one of two members that are the objects to be sealed in a vehicle of an automobile or the like, for example, the one member 101 formed of a cylinder head or the like of an internal combustion engine is disposed. Further, on a lower side (the arrow b direction) of the gasket 1, another one of the two members that are the objects to be sealed in the vehicle of an automobile or the like, for example, the other member 102 formed of a cylinder block or the like of the internal combustion engine is disposed.

The one member 101 and the other member 102 respectively include diameter increasing surfaces 103 and 104 that increase in diameter toward the directions (the arrows ab directions) away from each other, in end portions at the outer periphery side (the arrow d direction). Specifically, in an end portion of the outer periphery side (the arrow d direction) of the one member 101, the annular diameter increasing surface 103 is formed as illustrated in Fig. 3. The diameter increasing surface 103 extends from a plane 100a of the one member 101 to the upper side (the arrow a direction) diagonally while increasing in diameter to the outer periphery side (the arrow d direction). Further, in an end portion of the outer periphery side (the arrow d direction) of the other member 102, the annular diameter increasing surface 104 is formed. The diameter increasing surface 104 extends from a plane 102a of the other member 102 diagonally to the lower side (the arrow b direction) while increasing in diameter to the outer periphery side (the arrow d direction).

The gasket 1 is arranged and held between the one member 101 and the other member 102 of the objects to be sealed in the mounted state, is arranged and pressed between the one member 101 and the other member 102 to be elastically deformed, and seals a space between the one member 101 and the other member 102. Specifically, the one member 101 and the other member 102 are fastened in a state where the plane 100a formed in the one member 101 and the plane 102a formed in the other member 102 oppose each other, and the gasket 1 is arranged and pressed between the plane 100a and the plane 102a to be elastically deformed.

The one member 101 and the other member 102 are, for example, a cylinder block and a cylinder head of an engine, a cylinder block and an oil pan, members forming a case of a fuel cell stack, a housing of the other devices and the like. The planes 100a and 102a are formed in flange portions formed in the one member 101 and the other member 102, for example.

The gasket 1 elastically deforms from a free state illustrated in Fig. 2 in a fastening process of the one member 101 and the other member 102, and fastening operation is performed until a desired contact pressure occurs in a contact portion (seal line) of the one member 101 and the other member 102. Fastening is performed by screwing bolts, for example.

The one member 101 and the other member 102 are fastened, and the upper surface 15a of the upper outer periphery side annular portion 15 of the upper gasket member 10 and the upper surface 17a of the upper inner periphery side annular portion 17 contact (surface contact) the plane 101a of the one member 101 and is pressed to the lower side (the arrow b direction). Further, the lower surface 25b of the lower outer periphery side annular portion 25 of the lower gasket member 20 and the lower surface 27b of the lower inner periphery side annular portion 27 contact the plane 102a of the other member 102 and are pressed to the upper side (the arrow a direction).

Thereby, the metal plate 11 of the upper gasket member 10 elastically deforms, the upper outer periphery portion 14 and the upper inner periphery portion 16 are curved to the lower side (the arrow b direction) to the upper base portion 13, the angels θ2 and θ1 decrease, and the height h2 of the upper outer periphery side annular portion 15 and the height h1 of the upper inner periphery side annular portion 17 decrease. Further, the metal plate 21 of the lower gasket member 20 elastically deforms, the lower outer periphery portion 24 and the lower inner periphery portion 26 are curved to the upper side (the arrow a direction) to the lower base portion 23, the angels θ4 and θ3 decrease, and the height h4 of the lower outer periphery side annular portion 25 and the height h3 of the lower inner periphery side annular portion 27 decrease.

When the one member 101 and the other member 102 are further fastened firmly, a space between the plane 100a and the plane 102a is further narrowed, and when the space between the plane 100a and the plane 102a reaches a certain space, a reaction force to the upper base portion 13 that is generated by bending deformation of the upper outer periphery portion 14 and the upper inner periphery portion 16 of the upper gasket member 10 exceeds a predetermined value, and the upper base portion 13 warps and bends so as to project to the upper side (the arrow a direction) as illustrated in Fig. 3. Thereby, surface contact of the upper base portion 13 of the upper gasket member 10 and the lower base portion 23 of the lower gasket member 20 is eliminated.

The upper gasket member 10 contacts a lower outer periphery contact portion 20a and a lower inner periphery contact portion 20b that will be described later of the lower gasket member 20, in a portion (Hereinafter, referred to as an upper outer periphery contact portion 10a.) in a vicinity of a connection portion (outer periphery edge portion 13d) of the upper base portion 13 and the upper outer periphery portion 14, and a portion (Hereinafter, referred to as an upper inner periphery contact portion 10b.) in a vicinity of a connection portion (inner periphery edge portion 13c) of the upper base portion 13 and the upper inner periphery portion 16. Further, the upper gasket member 10 comes into contact with the plane 101a of the one member 101 in a center portion of the upper surface 13a of the upper base portion 13 and a vicinity of the center portion (Hereinafter, referred to as an upper surface center contact portion 10c.).

Further, at this time, the upper outer periphery side annular portion 15 continues to contact the plane 101a of the one member 101 in the upper surface 15a, and the upper inner periphery side annular portion 17 also continues to contact the plane 101a of the one member 101 in the upper surface 17a. In this way, between the one member 101 and the lower gasket member 20, five seal lines are formed by the upper gasket member 10.

When a space between the plane 100a and the plane 102a reaches a certain space, a reaction force to the lower base portion 23 that is generated by bending deformation of the lower outer periphery portion 24 and the lower inner periphery portion 26 of the lower gasket member 20 exceeds a predetermined value, and the lower base portion 23 warps and bends so as to project toward the lower side (the arrow b direction) as illustrated in Fig. 3. Thereby, surface contact of the lower base portion 23 of the lower gasket member 20 and the upper base portion 13 of the upper gasket member 10 is eliminated.

The lower gasket member 20 contacts the upper outer periphery contact portion 10a and the upper inner periphery contact portion 10b of the upper gasket member 10 in a portion (Hereinafter, referred to as the lower outer periphery contact portion 20a.) in a vicinity of the connection portion (outer periphery edge portion 23d) of the lower base portion 23 and the lower outer periphery portion 24, and a portion (Hereinafter, referred to as the lower inner periphery contact portion 20b.) in a vicinity of the connection portion (inner periphery edge portion 23c) of the lower base portion 23 and the lower inner periphery portion 26. Further, the lower gasket member 20 comes into contact with the plane 102a of the other member 102 in a center portion of the lower surface 23b of the lower base portion 23 and a vicinity (Hereinafter, referred to as the lower surface center contact portion 20c.) of the center portion.

Further, at this time, the lower outer periphery side annular portion 25 continues to contact the plane 102a of the other member 102 in the lower surface 25b, and the lower inner periphery side annular portion 27 also continues to contact the plane 102a of the other member 102 in the lower surface 27b. In this way, five seal lines are formed by the lower gasket member 20, between the other member 102 and the upper gasket member 10.

When a fastening force of the one member 101 and the other member 102, that is, an axial force of the bolts reach a predetermined set value, fastening of the one member 101 and the other member 102 is completed, and the gasket 1 is in a mounted state. In this way, the gasket 1 is in a state of being arranged and pressed to seal the space between the plane 100a and the plane 102a with desired airtightness.

In the gasket 1 that is arranged and pressed in the mounted state, in the upper outer periphery side annular portion 15, the upper rubber layer 12a is pressed with a pressure of a desired magnitude to the plane 101a of the one member 101 and is in close contact with the plane 100a, and contact pressure of a desired magnitude occurs to a seal line s2 formed in the contact portion. Further, in the upper inner periphery side annular portion 17, the upper rubber layer 12a is pressed with a pressure of a desired magnitude to the plane 101a of the one member 101 and is in close contact with the plane 100a, and contact pressure of a desired magnitude occurs to a seal line s1 formed in the contact portion.

Further, the upper outer periphery contact portion 10a is in close contact with the lower outer periphery contact portion 20a by the lower rubber layer 12b being pressed with a pressure of a desired magnitude to the lower gasket member 20, and contact pressure of a desired magnitude occurs to a seal line s4 formed in the contact portion. Further, the upper inner periphery contact portion 10b is in close contact with the lower inner periphery contact portion 20b by the lower rubber layer 12b being pressured with a pressure of a desired magnitude to the lower gasket member 20, and a contact pressure of a desired magnitude occurs to a seal line s3 formed in the contact portion.

Further, in an upper surface center contact portion 10c, the upper rubber layer 12a is pressed with a pressure of a desired magnitude to the plane 101a of the one member 101 and is in close contact with the plane 100a, and contact pressure of a desired magnitude occurs to a seal line s5 formed in the contact portion.

In the lower outer periphery side annular portion 25, the lower rubber layer 22b is pressed with a pressure of a desired magnitude to the plane 102a of the other member 102 and is in close contact with the plane 102a, and contact pressure of a desired magnitude occurs to a seal line s7 formed in the contact portion. Further, in the lower inner periphery side annular portion 27, the lower rubber layer 22b is pressed with a pressure of a desired magnitude to the plane 102a of the other member 102 to be in close contact with the plane 102a, and contact pressure of a desired magnitude occurs to a seal line s6 formed in the contact portion.

Further, in the lower outer periphery contact portion 20a, the upper rubber layer 22a is pressed with a pressure of a desired magnitude to the upper gasket member 10 to be in close contact with the upper outer periphery contact portion 10a, and contact pressure of a desired magnitude occurs to a seal line s9 formed in the contact portion. Further, in the lower inner periphery contact portion 20b, the upper rubber layer 22a is pressed with a pressure of a desired magnitude to the upper gasket member 10 to be in close contact with the upper inner periphery contact portion 10b, and contact pressure of a desired magnitude occurs to a seal line s8 formed in the contact portion.

Further, in the lower surface center contact portion 20c, the lower rubber layer 22b is pressed with a pressure of a desired magnitude to the plane 102a of the other member 102 to be in close contact with the plane 102a, and a contact pressure of a desired magnitude occurs to a seal line s10 formed in the contact portion.

Accordingly, the gasket 1 seals the space between the plane 100a and the plane 102a in the mounted state, and restrains a matter inside the one member 101 and the other member 102, for example, lubricating oil or the like from leaking out through a gap between the planes 100a and 102a from the inner periphery side (the arrow c direction). Further, the gasket 1 prevents external salt water, a snow melting agent, dust and the like from entering through the gap between the planes 100a and 102a from the outer periphery side (the arrow d direction).

Further, in the gasket 1 arranged and pressed in the mounted state, the outer periphery edge portion 15d that is the edge portion on the outer periphery side of the upper outer periphery side annular portion 15 of the upper gasket member 10 is located in a same position as a corner portion on the lower side (the arrow b direction) in the diameter increasing surface 103 of the plane 101a of the one member 101 in the radial direction (the arrows cd directions). Further, the outer periphery edge portion 25d that is the edge portion on the outer periphery side of the lower outer periphery side annular portion 25 of the lower gasket member 20 is located at a same position as a corner portion on the upper side (the arrow a direction) in the diameter increasing surface 104 of the plane 102a of the other member 102 in the radial direction (the arrows cd directions).

In this way, in the gasket 1 according to the embodiment of the present invention, the upper gasket member 10 and the lower gasket member 20 are disposed to oppose each other. The upper gasket member 10 includes the upper base portion 13 of the annular flat plate, the upper outer periphery portion 14 extending diagonally to the upper side (the arrow a direction) from the outer periphery edge portion 13d of the upper base portion 13, and the upper outer periphery side annular portion 15 of the annular flat plate extending in the extension direction (the radial direction (the arrows cd directions) of the upper base portion 13 from the outer periphery edge portion 14d of the upper outer periphery portion 14. Further, the lower gasket member 20 includes the lower base portion 23 of the annular flat plate, the lower outer periphery portion 24 that extends diagonally to the lower side (the arrow b direction) from the outer periphery edge portion 23d of the lower base portion 23, and the lower outer periphery side annular portion 25 of the annular flat plate extending in the extension direction (radial direction (the arrows cd directions)) of the lower base portion 23 from the outer periphery edge portion 24d of the lower outer periphery portion 24.

Consequently, in the gasket 1 arranged and pressed in the mounted state, the contact pressure of a desired magnitude occurs to the seal line s2 formed in the contact portion of the upper surface 15a of the upper outer periphery side annular portion 15 and the plane 101a of the one member 101. Further, the contact pressure of a desired magnitude occurs to the seal line s7 that is formed in the contact portion of the lower surface 25b of the lower outer periphery side annular portion 25 and the plane 102a of the other member 102.

Accordingly, there is no gap between the plane 101a of the one member 101 of the object to be sealed and the upper surface 15a of the upper outer periphery side annular portion 15 of the upper gasket member 10, salt water can be prevented from staying between the plane 101a of the one member 101 and the upper surface 15a of the upper outer periphery side annular portion 15, and a speed at which the one member 101 is corroded can be further reduced. Further, since there is no gap between the plane 102a of the other member 102 of the object to be sealed and the lower surface 25b of the lower outer periphery side annular portion 25 of the lower gasket member 20, salt water can be prevented from staying between the plane 102a of the other member 102 and the lower surface 25b of the lower outer periphery side annular portion 25, and a speed at which the other member 102 is corroded can be further reduced.

Further, since the upper rubber layer 12a of the upper outer periphery side annular portion 15 of the upper gasket member 10 is pressed to the plane 101a of the one member 101 and is in close contact with the plane 100a, the metal plate 11 of the upper gasket member 10 can be prevented from breaking the one member 101 by contacting the one member 101. Further, since the lower rubber layer 22b of the lower outer periphery side annular portion 25 of the lower gasket member 20 is pressed to the plane 102a of the other member 102 to be in close contact with the plane 102a, the metal plate 21 of the lower gasket member 20 can be prevented from breaking the other member 102 by contacting the other member 102.

Further, since the upper surface 15a of the upper outer periphery side annular portion 15 of the upper gasket member 10 is pressed to the plane 101a of the one member 101 and is in close contact with the plane 101a, the space between the one member 101 and the other member 102 can be closed in a wide range by the upper outer periphery side annular portion 15. Further, since the lower surface 25b of the lower outer periphery side annular portion 25 of the lower gasket member 20 is pressed to the plane 102a of the other member 102 and is in close contact with the plane 102a, the space between the one member 101 and the other member 102 can be closed in a wide range by the lower outer periphery side annular portion 25. Consequently, in the gasket 1, external salt water, a snow melting agent, dust and the like can be further prevented from entering via the gap between the planes 100a and 102a from the outer periphery side (the arrow d direction).

Further, the upper gasket member 10 includes the upper inner periphery portion 16 that extends diagonally to the upper side (the arrow a direction) from the outer periphery edge portion 13d of the upper base portion 13, and the upper inner periphery side annular portion 17 of the annular flat plate extending in the extension direction (the radial direction (the arrows cd directions)) of the upper base portion 13 from the inner periphery edge portion 16c of the upper inner periphery portion 16. The lower gasket member 20 includes the lower inner periphery portion 26 diagonally extending to the lower side (the arrow b direction) from the inner periphery edge portion 23c of the lower base portion 23, and the lower inner periphery side annular portion 27 of the annular flat plate extending in the extension direction (the radial direction (the arrows cd directions)) of the lower base portion 23 from the inner periphery edge portion 26c of the lower inner periphery portion 26.

Consequently, since the upper surface 17a of the upper inner periphery side annular portion 17 of the upper gasket member 10 is pressed to the plane 101a of the one member 101 and is in close contact with the plane 101a, the space between the one member 101 and the other member 102 can be closed in the wide range by the upper inner periphery side annular portion 17. Further, since the lower surface 27b of the lower inner periphery side annular portion 27 of the lower gasket member 20 is pressed to the plane 102a of the other member 102 and is in close contact with the plane 102a, the space between the one member 101 and the other member 102 can be closed in the wide range by the lower inner periphery side annular portion 27. Thereby, lubricating oil or the like inside of the one member 101 and the other member 102 can be further restrained from leaking out via the gap between the planes 100a and 102a from the inner periphery side (the arrow c direction).

Further, in the sealing structure 100 according to the embodiment of the present invention, the one member 101 and the other member 102 respectively include the diameter increasing surfaces 103 and 104 that increases in diameter toward the directions (the arrows ab directions) away from each other, in the end portions of the outer periphery side (the arrow d direction). Further, in the sealing structure 100 according to the embodiment of the present invention, the outer periphery edge portion 15d of the upper outer periphery side annular portion 15 is located in a same position as a corner portion on the lower side (the arrow b direction) in the diameter increasing surface 103 of the plane 101a of the one member 101, and the outer periphery edge portion 25d of the lower outer periphery side annular portion 25 is located in a same position as a corner portion on the upper side (the arrow a direction) in the diameter increasing surface 104 of the plane 102a of the other member 102. Consequently, salt water can be prevented from staying in the plane 101a of the one member 101 and the plane 102a of the other member 102, and a speed at which the one member 101 and the other member 102 are corroded can be further reduced.

The preferred embodiment of the present invention is described thus far, but the present invention includes all modes included in the concept and the claim of the present invention without being limited to the above described embodiment. Further, the respective components may be properly combined selectively to exhibit at least part of the aforementioned problem and effect. Further, for example, shapes, materials, dispositions, sizes and the like of the respective components in the above described embodiment can be properly changed according to specific usage modes of the present invention.

For example, in the gasket 1 according to the embodiment of the present invention, the embodiment of the present invention is described by taking the case where the upper outer periphery side annular portion 15 and the lower outer periphery side annular portion 25 are formed in the free state as an example. However, the present invention is not limited to this, and the upper outer periphery side annular portion 15 and the lower outer periphery side annular portion 25 may be curved and formed in the gasket 1 that is arranged and pressed in the mounted state.

Further, in the gasket 1 according to the embodiment of the present invention, the embodiment of the present invention is explained by taking the case where the upper inner periphery portion 16, the upper inner periphery side annular portion 17, the lower inner periphery portion 26 and the lower inner periphery side annular portion 27 are included as an example. However, the present invention is not limited to this, and does not have to have the upper inner periphery portion 16, the upper inner periphery side annular portion 17, the lower inner periphery portion 26 and the lower inner periphery side annular portion 27, and shapes of the inner periphery sides (the arrow c direction) of the upper gasket member 10 and the lower gasket member 20 can be arbitrary shapes that can restrain the lubricating oil or the like in the one member 101 and the other member 102 from leaking out.

### List of Reference Signs

1 gasket,
10 upper gasket member,
11 metal plate,
11a upper surface,
11b lower surface,
12a upper rubber layer,
12b lower rubber layer,
13 upper base portion
13a upper surface,
13b lower surface,
13c inner periphery edge portion,
13d outer periphery edge portion,
14 upper outer periphery portion,
14a upper surface,
14b lower surface,
14d outer periphery edge portion,
15 upper outer periphery side annular portion,
15a upper surface,
15b lower surface,
15d outer periphery edge portion,
16 upper inner periphery portion,
16a upper surface,
16b lower surface,
16c inner periphery edge portion,
17 upper inner periphery side annular portion,
17a upper surface,
17b lower surface,
20 lower gasket member,
21 metal plate,
21a upper surface,
21b lower surface,
22a upper rubber layer,
22b lower rubber layer,
23 lower base portion,
23a upper surface,
13b lower surface,
13c inner periphery edge portion,
13d outer periphery edge portion,
24 lower outer periphery portion,
24a upper surface,
24b lower surface,
24d outer periphery edge portion,
25 lower outer periphery side annular portion,
25a upper surface,
25b lower surface,
25d outer periphery edge portion,
26 lower inner periphery portion,
26a upper surface,
26b lower surface,
26c inner periphery edge portion,
27 lower inner periphery side annular portion,
27a upper surface,
27b lower surface,
30 positioning portion,
31 bolt hole,
s1 to 10 seal line,
Y1 axis

## Claims

1. A sealing structure comprising
a gasket (1) comprising a first gasket member (10) and a second gasket member (20) each including a metal plate (11, 21), and
first and second members (101, 102) that form a housing by being combined with each other,
wherein:
the gasket (1) is arranged and held in a space between the first and second members (101, 102) for sealing the space;
the first and second gasket members (10, 20) oppose each other, and respectively comprise
base portions (13, 23) of annular flat plates,
outer periphery portions (14, 24) diagonally extending in directions away from each other from edge portions (13d, 23d) on an outer periphery side of the base portions (13, 23),
outer periphery side annular portions (15, 25) of annular flat plates extending in an extension direction of the base portions (13, 23) from the edge portions (14d, 24d) on the outer periphery side of the outer periphery portions (14, 24),
inner periphery portions (16, 26) diagonally extending in directions away from each other from edge portions (13c, 23c) on an inner periphery side of the base portions (13, 23), and
inner periphery side annular portions (17, 27) of annular flat plate extending in the extension direction of the base portions (13, 23) from edge portions (16c, 26c) on the inner periphery side of the pair of inner periphery portions (16, 26);
the outer periphery portions (14, 24) respectively increase in diameter toward the directions away from each other; and
the inner periphery portions (16, 26) respectively decrease in diameter toward the directions away from each other,
**characterized in that**:
in the edge portion (13d) of the first gasket member (10), first positioning portions (30) each protruding toward the outer periphery side from an outer peripheral surface of the first gasket member (10) are provided;
in the first positioning portions (30), first bolt holes (31) are formed;
in the second gasket member (20), second positioning portions (30) each projecting toward the outer periphery side from an outer peripheral surface of the second gasket member (20) are provided in same or substantially the same positions as the first positioning portions (30) of the first gasket member (10) when viewed in an axial direction of the gasket (1);
in the second positioning portions (30), second bolt holes (31) are formed, in same or substantially the same positions as the first bolt holes (31) when viewed in the axial direction of the gasket (1);
the sealing structure further comprises bolts for fastening the first and second members (101, 102) and arranging and holding the gasket (1) between the first and second members (101, 102), the bolts being inserted through the first and second bolt holes (31);
the metal plate (11, 21) has elasticity;
the gasket (1) further comprises rubber layers (12a, 12b, 22a, 22b) coated on both surfaces of the metal plate (11, 21); and
in a state where the first member (101) and the second member (102) are fastened by a fastening force, the gasket (1) is configured such that, when a space between a first plane (101a) formed in the first member (101) and a second plane (102a) formed in the second member (102) is narrowed, the first gasket member (10) comes into contact with the first plane (101a) in a first center portion of a first surface (13a) and a vicinity of the first center portion (13a) by an elastic deformation of the metal plate (11) of the first gasket member (10), and the second gasket member (20) comes into contact with the second plane (102a) in a second center portion of a second surface (23a) and a vicinity of the second center portion (23a) by an elastic deformation of the metal plate (21) of the second gasket member (20),
the first plane (101a) and the second plane (102a) opposing each other,
the first surface (13a) being of the base portion (13) of the first gasket member (10) and extending between the edge portions (13c, 13d) of the first gasket member (10),
the second surface (23a) being of the base portion (23) of the second gasket member (20) and extending between the edge portions (23c, 23d) of the second gasket member (20).

## Patentansprüche

1. Abdichtungsstruktur, die aufweist
einer Dichtung (1), die ein erstes Dichtungselement (10) und ein zweites Dichtungselement (20) aufweist, die jeweils eine Metallplatte (11, 21) enthalten, und
ein erstes und ein zweites Element (101, 102), die ein Gehäuse bilden, indem sie miteinander kombiniert werden,
wobei:
die Dichtung (1) in einem Raum zwischen dem ersten und dem zweiten Element (101, 102) angeordnet und gehalten ist, um den Raum abzudichten;
das erste und das zweite Dichtungselement (10, 20) einander gegenüberliegen und jeweils aufweisen
Basisabschnitte (13, 23) aus ringförmigen flachen Platten, Außenumfangsabschnitte (14, 24), die sich diagonal in Richtungen weg voneinander von Randabschnitten (13d, 23d) auf einer Außenumfangsseite der Basisabschnitte (13, 23) erstrecken,
außenumfangsseitige ringförmige Abschnitte (15, 25) von ringförmigen flachen Platten, die sich in einer Erstreckungsrichtung der Basisabschnitte (13, 23) von den Randabschnitten (14d, 24d) an der Außenumfangsseite der Außenumfangsabschnitte (14, 24) erstrecken, Innenumfangsabschnitte (16, 26), die sich diagonal in Richtungen weg voneinander von Randabschnitten (13c, 23c) auf einer Innenumfangsseite der Basisabschnitte (13, 23) erstrecken, und
innenumfangsseitige ringförmige Abschnitte (17, 27) von ringförmigen flachen Platten, die sich in einer Erstreckungsrichtung der Basisabschnitte (13, 23) von den Randabschnitten (16c, 26c) an der Innenumfangsseite des Paares von Innenumfangsabschnitten (16, 26) erstrecken;
die Außenumfangsabschnitte (14, 24) jeweils in Richtungen weg voneinander im Durchmesser zunehmen; und
die Innenumfangsabschnitte (16, 26) jeweils in Richtungen weg voneinander im Durchmesser abnehmen,
**dadurch gekennzeichnet, dass**:
im Randabschnitt (13d) des ersten Dichtungselements (10) erste Positionierungsabschnitte (30) vorgesehen sind, die jeweils von einer Außenumfangsfläche des ersten Dichtungselements (10) zur Außenumfangsseite vorstehen;
in den ersten Positionierungsabschnitten (30) erste Schraubenlöcher (31) ausgebildet sind;
im zweiten Dichtungselement (20) zweite Positionierungsabschnitte (30), die jeweils von einer Außenumfangsfläche des zweiten Dichtungselements (20) zur Außenumfangsseite vorstehen, in axialer Richtung der Dichtung (1) betrachtet an denselben oder im Wesentlichen denselben Positionen wie die ersten Positionierungsabschnitte (30) des ersten Dichtungselements (10) vorgesehen sind;
in den zweiten Positionierungsabschnitten (30) zweite Schraubenlöcher (31) in axialer Richtung der Dichtung (1) betrachtet an denselben oder im Wesentlichen denselben Positionen wie die ersten Schraubenlöcher (31) ausgebildet sind;
die Abdichtungsstruktur ferner Schrauben zum Befestigen des ersten und des zweiten Elements (101, 102) und zum Anordnen und Halten der Dichtung (1) zwischen dem ersten und dem zweiten Element (101, 102) aufweist, wobei die Schrauben durch die ersten und zweiten Schraubenlöcher (31) eingeführt sind; die Metallplatte (11, 21) Elastizität aufweist;
die Dichtung (1) ferner Gummischichten (12a, 12b, 22a, 22b) aufweist, die auf beide Flächen der Metallplatte (11, 21) beschichtet sind; und
in einem Zustand, in dem das erste Element (101) und das zweite Element (102) durch eine Befestigungskraft befestigt sind, die Dichtung (1) so konfiguriert ist, dass, wenn ein Raum zwischen einer im ersten Element (101) ausgebildeten ersten Ebene (101a) und einer im zweiten Element (102) ausgebildeten zweiten Ebene (102a) verengt wird, das erste Dichtungselement (10) mit der ersten Ebene (101a) in einem ersten mittleren Abschnitt einer ersten Fläche (13a) und in einer Umgebung des ersten mittleren Abschnitts (13a) durch eine elastische Verformung der Metallplatte (11) des ersten Dichtungselements (10) in Kontakt kommt, und das zweite Dichtungselement (20) mit der zweiten Ebene (102a) in einem zweiten mittleren Abschnitt einer zweiten Fläche (23a) und in einer Umgebung des zweiten mittleren Abschnitts (23a) durch eine elastische Verformung der Metallplatte (21) des zweiten Dichtungselements (20) in Kontakt kommt,
wobei die erste Ebene (101a) und die zweite Ebene (102a) einander gegenüberliegen,
wobei die erste Fläche (13a) zum Basisabschnitt (13) des ersten Dichtungselements (10) gehört und sich zwischen den Randabschnitten (13c, 13d) des ersten Dichtungselements (10) erstreckt,
wobei die zweite Fläche (23a) zum Basisabschnitt (23) des zweiten Dichtungselements (20) gehört und sich zwischen den Randabschnitten (23c, 23d) des zweiten Dichtungselements (20) erstreckt.

## Revendications

1. Structure d'étanchéité, comprenant
un joint (1) comprenant un premier élément de joint (10) et un deuxième élément de joint (20) présentant chacun une plaque métallique (11, 21), et
un premier et un deuxième éléments (101, 102) formant un boîtier par assemblage de l'un à l'autre,
où :
le joint (1) est disposé et maintenu dans un espace entre le premier et le deuxième éléments (101, 102) afin de combler ledit espace ;
le premier et le deuxième éléments de joint (10, 20) sont opposés l'un à l'autre et comprennent respectivement
des parties de base (13, 23) constituées de plaques annulaires planes, des parties périphériques extérieures (14, 24) s'étendant en diagonale dans des directions opposées depuis des parties de bord (13d, 23d) sur un côté de périphérie extérieure des parties de base (13, 23),
des parties annulaires côté de périphérie extérieure (15, 25) constituées de plaques annulaires planes s'étendant dans une direction d'extension des parties de base (13, 23) depuis les parties de bord (14d, 24d) sur le côté de périphérie extérieure des parties périphériques extérieures (14, 24),
des parties périphériques intérieures (16, 26) s'étendant en diagonale dans des directions opposées depuis des parties de bord (13c, 23c) sur un côté de périphérie intérieure des parties de base (13, 23), et
des parties annulaires côté de périphérie intérieure (17, 27) de la plaque annulaire plane s'étendant dans la direction d'extension des parties de base (13, 23) depuis des parties de bord (16c, 26c) sur le côté de périphérie intérieure de la paire de parties périphériques intérieures (16, 26) ;
les diamètres des parties périphériques extérieures (14, 24) augmentent respectivement dans les directions opposées ; et
les diamètres des parties périphériques intérieures (16, 26) diminuent respectivement dans les directions opposées,
**caractérisée en ce que** :
dans la partie de bord (13d) du premier élément de joint (10), sont prévues des premières parties de positionnement (30), faisant chacune saillie vers le côté de périphérie extérieure depuis une surface périphérique extérieure du premier élément de joint (10) ;
dans les premières parties de positionnement (30), sont formés des premiers trous de boulon (31) ;
dans le deuxième élément de joint (20), sont prévues des deuxièmes parties de positionnement (30), faisant chacune saillie vers le côté de périphérie extérieure depuis une surface périphérique extérieure du deuxième élément de joint (20), à des emplacements identiques ou sensiblement identiques à ceux des premières parties de positionnement (30) du premier élément de joint (10), en vue dans la direction axiale du joint (1) ;
dans les deuxièmes parties de positionnement (30), sont formés des deuxièmes trous de boulon (31), à des emplacements identiques ou sensiblement identiques à ceux des premiers trous de boulon (31), en vue dans la direction axiale du joint (1) ;
la structure d'étanchéité comprend en outre des boulons destinés à fixer le premier et le deuxième éléments (101, 102) et à disposer et maintenir le joint (1) entre le premier et le deuxième éléments (101, 102), lesdits boulons étant insérés dans le premier et le deuxièmes trous de boulon (31) ;
la plaque métallique (11, 21) présente une élasticité ;
le joint (1) comprend en outre des couches de caoutchouc (12a, 12b, 22a, 22b) appliquées sur les deux faces de la plaque métallique (11, 21) ; et,
dans un état où le premier élément (101) et le deuxième élément (102) sont serrés par une force de serrage, le joint (1) est prévu de sorte que, lorsqu'un espace entre un premier plan (101a) formé dans le premier élément (101) et un deuxième plan (102a) formé dans le deuxième élément (102) se réduit, le premier élément de joint (10) entre en contact avec le premier plan (101a) dans une première partie centrale d'une première surface (13a) et à proximité de ladite première partie centrale (13a) sous l'effet d'une déformation élastique de la plaque métallique (11) du premier élément de joint (10), et le deuxième élément de joint (20) entre en contact avec le deuxième plan (102a) dans une deuxième partie centrale d'une deuxième surface (23a) et à proximité de ladite deuxième partie centrale (23a) sous l'effet d'une déformation élastique de la plaque métallique (21) du deuxième élément de joint (20),
le premier plan (101a) et le deuxième plan (102a) étant opposés l'un à l'autre,
la première surface (13a) faisant partie de la partie de base (13) du premier élément de joint (10) et s'étendant entre les parties de bord (13c, 13d) du premier élément de joint (10),
la deuxième surface (23a) faisant partie de la partie de base (23) du deuxième élément de joint (20) et s'étendant entre les parties de bord (23c, 23d) du deuxième élément de joint (20).
